# FASCICULE DE BREVET EUROPEEN

(11) **EP 3 766 715 B1**
(45) Date de publication et mention de la délivrance du brevet: **22.03.2023**
(21) Numéro de dépôt: 20185228.2
(22) Date de dépôt: 10.07.2020
(51) Int. Cl.: B60J 5/10

(54) **INSERT DE RENFORT MUNI D'ORIFICES TRAVERSANTS**
VERSTÄRKUNGSEINSATZ, DER MIT DURCHGANGSLÖCHERN VERSEHEN IST
REINFORCING INSERT PROVIDED WITH THROUGH-HOLES

(30) Priorité: 15.07.2019 FR 1907931
(43) Date de publication de la demande: 20.01.2021
(73) Titulaire: Compagnie Plastic Omnium SE, 69007 Lyon (FR)
(72) Inventeur: RAJON, Alexis, 01150 Sainte-Julie (FR); TCHAPPSKY, Willem, 01150 Sainte-Julie (FR)
(74) Mandataire: LLR

(56) Documents cités:
- WO-A1-2009/143627
- DE-A1-102012 212 816
- DE-A1-102013 200 677
- KR-B1- 101 972 021

## Description

L'invention concerne le domaine de l'industrie automobile, et en particulier le domaine des pièces de carrosserie en matière plastique localement renforcées par des inserts surmoulés.

En particulier l'invention concerne un élément de renforcement de type insert, apte à être surmoulé localement dans une pièce de carrosserie afin de la renforcer mécaniquement. L'insert peut être en métal, en particulier en acier, ou en matière plastique composite. La pièce de carrosserie peut être un hayon ou une porte latérale.

On connaît, dans l'état de la technique, un ouvrant arrière, de type hayon notamment, réalisé en matière plastique, comprenant une peau extérieure d'aspect, et une doublure intérieure de structure réalisée en matière thermoplastique chargée. La matière thermoplastique constituant la doublure est par exemple chargée de fibres de verre ou de talc pour accroître ses propriétés de résistance mécanique.

La doublure de hayon subit de nombreuses contraintes mécaniques lors de sa fabrication, principalement des déformations géométriques inhérentes au procédé de moulage, et des sollicitations mécaniques lors de son utilisation une fois assemblée sur le véhicule.

Afin de mieux supporter les efforts mécaniques de fonctionnement sur véhicule, la doublure intérieure est généralement renforcée par des éléments de renfort. Le document KR 101972021 B, ou le document EP1927453 du déposant montre que les éléments de renfort peuvent être surmoulés dans la matière thermoplastique de la doublure au niveau des zones charnières, rotules ou serrure, afin de pallier les différents efforts produits par les équipements (vérins, butées ou joint d'étanchéité) et qui génèrent des déformations.

L'efficacité en renforcement de l'insert surmoulé dépend de la qualité et de la robustesse du couplage mécanique entre la pièce de carrosserie et l'insert de renfort.

Il est connu d'effectuer un blocage mécanique de l'insert de renfort dans la pièce, en encapsulant au moins partiellement l'insert surmoulé dans la matière plastique. L'encapsulage consiste à surmouler l'insert en recouvrant au moins partiellement deux de ses faces opposées, ou de façon plus générale, qu'en un point donné de l'insert, il est surmoulé de part et d'autre de ce point.

Cet encapsulage peut se situer en périphérie de l'insert surmoulé, la matière surmoulée passant d'une face à l'autre de la pièce en contournant et recouvrant le bord pièce. Ce surmoulage périphérique du bord permet de compenser les dispersions géométriques liées aux dimensions de l'insert et éviter toute interférence de positionnement avec la matrice du moule.

Il est également connu d'effectuer un blocage mécanique de l'insert de renfort dans la pièce, en munissant l'insert surmoulé d'orifices, dits « orifices d'ancrage », traversant l'épaisseur de l'insert, et au travers desquels passe la matière plastique pour assurer ainsi un maintien mécanique des deux éléments (insert et pièce).

Cependant la pièce de carrosserie et l'insert présentent des différences de dilatation sous l'effet de la température, dues au fait que la pièce et l'insert sont dans des matériaux ayant un CLTE (expression anglaise pour « Coefficient of Linear Thermal Expansion », ou coefficient de dilatation thermique linéaire) différent. Ceci génère des contraintes qui peuvent créer une fragilité sur la matière plastique. Lorsque le plastique se rétracte ou se dilate sur l'insert, il est sollicité au niveau des différentes zones de surmoulage : orifices traversants et surmoulage périphérique. Les efforts mécaniques et les variations de température répétées génèrent des contraintes locales qui peuvent induire des fissures au niveau des zones de surmoulage périphérique du bord.

Il aurait pu être envisagé de résoudre ce problème en augmentant l'épaisseur du surmoulage du bord, ou en utilisant un plastique plus résistant, solutions qui génèrent une augmentation de la masse de l'ensemble de la pièce et de l'insert.

L'invention a notamment pour but de résoudre le problème en fournissant un insert de renfort dont la structure permet de relaxer les contraintes entre l'insert et la pièce de carrosserie, et d'augmenter localement la longueur d'interface « au bord » entre l'insert et le surmoulage réalisé par la pièce plastique, et ainsi favoriser le couplage dans cette zone.

A cet effet l'invention a pour objet un élément de renforcement pour pièce de carrosserie en matière plastique, formant un insert apte à être au moins partiellement surmoulé dans la pièce de carrosserie, l'élément de renforcement comprenant une paroi délimitée par un contour, la paroi comprenant plusieurs orifices qui traversent totalement l'épaisseur de la paroi de l'élément de renforcement, lesquels orifices sont chacun :
- une encoche débouchant au niveau du contour.

La présence de l'orifice traversant surmoulé dans l'insert, c'est-à-dire l'encoche, donne localement à l'insert une faculté de déformation supplémentaire, en cas de dilatation thermique, ou d'effort mécanique.

On entend par « zone du contour » une zone dont une des limites est formée par le contour de la paroi de l'élément de renforcement.

On entend ici par « longueur de la paroi de l'élément de renforcement» sa dimension dans le sens de sa plus grande étendue. On entend par « largeur de la paroi de l'élément de renforcement» sa dimension dans le sens perpendiculaire à la longueur. Enfin, on entend par « épaisseur de la paroi de l'élément de renforcement» sa troisième dimension, autre que la longueur et la largeur, qui est la plus petite des dimensions de la paroi de l'élément de renforcement.

On entend ici par « encoche » un évidement de forme allongée, débouchant au niveau du contour par une ouverture de faible largeur. Les encoches peuvent avoir, dans le plan local de la paroi de l'élément de renforcement, une forme rectangulaire. Cependant elles pourraient également comporter un resserrement, ou bien être évasées en partant du bord du contour, ayant ainsi, par exemple une forme de type « pièce de puzzle », telle qu'une forme en T, ou une forme en queue d'aronde, en trapèze, éventuellement avec des angles arrondis, en oméga, en ellipse, en arc de cercle. L'ouverture de l'encoche est un espace délimité par les deux extrémités du contour au niveau desquelles celui-ci s'interrompt pour la formation de l'encoche. L'ouverture s'étend sur la largeur de l'encoche au niveau du contour. Au sens de l'invention, la largeur de l'ouverture est la distance la plus courte reliant les deux extrémités du contour délimitant l'ouverture de l'encoche.

L'élément de renforcement peut également comprendre un orifice qui traverse totalement l'épaisseur de la paroi de l'élément de renforcement, ou orifice traversant, et qui est non débouchant au niveau du contour. Celui-ci est différent des orifices d'ancrage fournis pour assurer un blocage mécanique de l'insert de renfort. En effet selon l'invention, cet orifice non débouchant n'est pas nécessairement destiné à être localisé sous une nervure de surmoulage issue de la pièce de carrosserie. Par ailleurs, il est situé dans une zone proche du bord de l'insert, c'est-à-dire une zone du contour qui s'étend sur environ 40 mm de largeur de la paroi. Cet orifice traversant, non débouchant au niveau du contour, est entièrement situé dans la zone du contour qui s'étend sur 40 mm de largeur.

Selon l'invention, l'encoche débouche au niveau du contour de la paroi par une ouverture dont la largeur, qui est la largeur de l'encoche au niveau du contour, est inférieure à la longueur de l'encoche. De façon préférée, la largeur est inférieure à ½ de la longueur, de façon encore plus préférée à 1/3 de la longueur, de façon encore plus préférée à ¼ de la longueur. La longueur est la plus grande dimension de l'encoche. Elle s'étend depuis l'ouverture jusqu'au fond de l'encoche.

Suivant d'autres caractéristiques optionnelles de l'élément de renforcement, prises seules ou en combinaison :
- L'élément de renforcement est fabriqué en métal, de préférence en acier.
- L'orifice traversant est destiné à être localisé partiellement ou en totalité sous une nervure de surmoulage issue de la pièce de carrosserie. Ceci contribue de plus au fait que le plastique passe d'une face à l'autre de l'insert, lors du surmoulage, et contribue donc à la bonne cohésion du plastique.
- L'orifice traversant n'est pas destiné à être localisée sous une nervure de surmoulage issue de la pièce de carrosserie.
- L'orifice traversant est situé sous le pied d'une nervure de surmoulage issue de la pièce de carrosserie.
- L'élément de renforcement comprend plusieurs orifices traversant similaires en forme, distribués régulièrement sur au moins une partie du contour. On entend par « distribués régulièrement sur au moins une partie du contour » le fait que sur cette partie du contour, les centres des ouvertures d'une paire de deux encoches successives sont séparés par une distance qui est identique, quelle que soit la paire d'encoches considérée. Sur ladite partie du contour, les orifices traversant, c'est-à-dire les encoches, peuvent être identiques ou différents.
- L'élément de renforcement comprend plusieurs orifices traversant similaires en forme, distribués de façon non régulière sur au moins une partie du contour. Sur cette partie du contour, les centres des ouvertures d'une paire de deux encoches successives sont séparés par une distance qui n'est pas identique pour toutes les paires d'encoches successives. Sur ladite partie du contour, les orifices traversant, c'est-à-dire les encoches, peuvent être identiques ou différents.
- L'élément de renforcement présente une section en forme de U, et les encoches sont sur la partie latérale de la paroi de l'élément de renforcement.

L'invention a également pour objet une pièce de carrosserie de véhicule automobile réalisée en matière plastique. Elle comporte un élément de renforcement tel que décrit ci-avant.

Suivant d'autres caractéristiques optionnelles de de la pièce de carrosserie de véhicule automobile, prises seules ou en combinaison :
- La matière plastique comble l'orifice traversant.
- L'orifice traversant n'est pas rempli de matière plastique. Pour ce faire, des contre-formes sont présentes dans le moule pour épargner ces orifices de la propagation de matière pendant l'injection.

On décrit également une pièce de carrosserie de véhicule automobile réalisée en matière plastique, qui comporte un élément de renforcement formant un insert apte à être au moins partiellement surmoulé dans la pièce de carrosserie. L'élément de renforcement comprend une paroi délimitée par un contour. La paroi comprend un orifice qui traverse totalement l'épaisseur de la paroi de l'élément de renforcement, lequel orifice n'est pas destiné à être localisé sous une nervure de surmoulage issue de la pièce de carrosserie.

Les pièces de carrosserie objets de l'invention peuvent constituer des doublures de hayon.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en perspective d'une doublure de hayon comportant un élément de renforcement selon un mode de réalisation de l'invention, surmoulé au niveau d'une zone d'effort de la doublure.
[Fig. 2] la figure 2 est un détail de la figure 1, permettant d'illustrer des orifices présents dans l'élément de renforcement.
[Fig. 3] la figure 3 est une vue en coupe selon A - A de la doublure de hayon de la figure 1, au niveau d'une zone ne comportant pas d'orifice traversant.
[Fig. 4] la figure 4 est une vue en coupe selon B - B de la doublure de hayon de la figure 1, au niveau d'un orifice traversant.
[Fig. 5] la figure 5 est une vue en coupe selon C - C de la doublure de hayon de la figure 1, au niveau d'un autre orifice traversant.
[Fig. 6] la figure 6 est une vue en perspective d'un élément de renforcement selon un autre mode de réalisation de l'invention, ainsi qu'un détail de cet élément de renforcement.

### Description détaillée

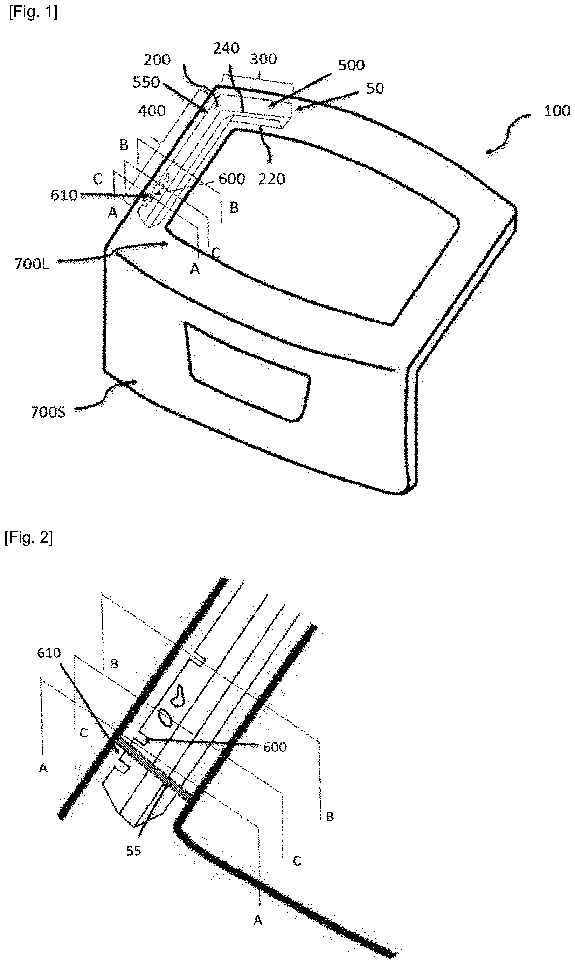

On a représenté sur les figures 1 à 5 une pièce de carrosserie en matière plastique 50 selon un mode de réalisation de l'invention, désigné par la référence générale 100. Selon cet exemple, il s'agit d'une doublure 100 de hayon, comportant un insert de renfort surmoulé, formant un élément de renforcement 200 au niveau de zones d'effort de la doublure 100, à savoir la zone supérieure 300 de fixation de charnières (non représentées) et la zone latérale 400 de reprise d'efforts de vérins (non représentés). L'élément de renforcement pourrait être situé dans d'autres zones d'effort, telles que la zone 700L latérale inférieure de la lunette et la zone serrure 700S.

L'élément de renforcement 200 forme un insert apte à être au moins partiellement surmoulé dans la pièce de carrosserie 100. Il comprend une paroi 500 délimitée par un contour 550, également appelé « fin de pièce ». La paroi comprend des orifices 600 qui traversent totalement l'épaisseur de la paroi 500 de l'élément de renforcement 200. Les orifices 600 sont situés dans une zone du contour 550 de 40 mm de largeur. Dans ce mode de réalisation, les orifices traversant 600 sont des encoches débouchant au niveau du contour 550 délimitant la paroi 500 de l'élément de renforcement 200 par une ouverture 650, comme l'orifice au niveau duquel passe le plan de coupe B - B. Dans ce mode de réalisation, l'élément de renforcement comprend également des orifices non débouchant au niveau du contour, comme l'orifice au niveau duquel passe le plan de coupe C - C.

Les orifices traversant 600 sont avantageusement destinés à être localisés en regard des zones en matière plastique de la pièce de carrosserie 100 susceptibles de présenter une fragilité créée par les contraintes dues à la différence de CLTE entre la matière plastique 50 constituant la pièce de carrosserie 100 et le matériau constituant l'insert 200. Dans ce mode de réalisation, l'élément de renforcement 200 est fabriqué de préférence en métal, plus particulièrement en acier. Il est aussi possible que l'insert soit réalisé en matériau composite, comme du SMC (« Sheet Molding Compound »). Ces zones de fragilité de la matière plastique sont des zones de concentration de contraintes qui peuvent être pré-identifiées par calcul ou grâce à l'expérience de l'homme du métier. Elles peuvent aussi être identifiées à la suite d'essais de validation du cahier des charges.

Les figures illustrent le fait que dans ce mode de réalisation, l'élément de renforcement 200 présente une section en forme de U. Les encoches 600 sont sur la partie latérale de la paroi 500 de l'élément de renforcement 200. L'élément de renforcement pourrait tout aussi bien présenter une autre forme, par exemple dans la zone serrure 700S, ou une forme plate pour un renfort de porte latérale. Sur le hayon monté sur le véhicule, la face « interne » 220 de l'élément de renforcement 200 est dirigée vers l'intérieur du véhicule et constitue, dans cet exemple, le creux de la forme en U, et sa face « externe» 240 est orientée vers l'extérieur du véhicule.

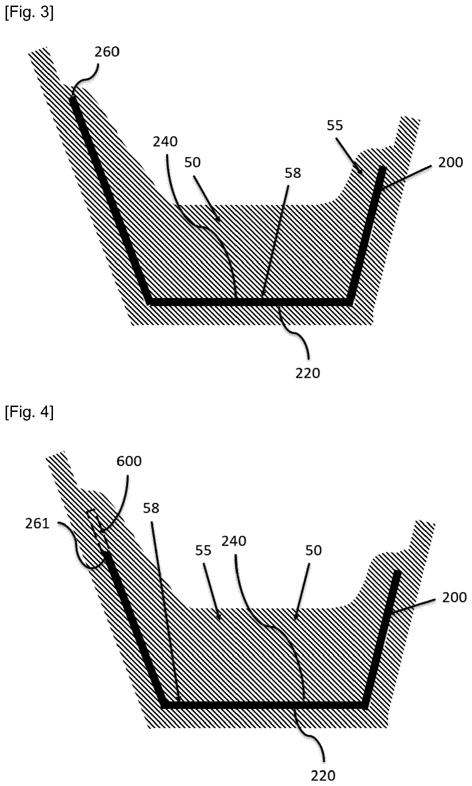

La figure 3 est une vue en coupe selon A - A de la doublure 100 de hayon. La coupe est effectuée en dehors des orifices traversants 600. L'élément de renforcement 200 est surmoulé par la matière plastique 50 formant la doublure intérieure 100 de hayon au moins sur sa face interne 220. S'agissant d'un hayon, la face interne de l'élément de renforcement pourrait être visible si elle n'était pas surmoulée. Le surmoulage permet ici de cacher l'élément de renforcement. Cependant si l'élément 200 renforçait une pièce technique 100 non visible, le surmoulage pourrait être partiel. Même dans le cas d'une pièce 100 visible, le surmoulage pourrait être partiel. Les zones visibles non surmoulées pourraient être cachées par une garniture d'habillage.

Sur sa face en creux 240, l'élément de renforcement 200 présente une nervure 55 obtenue par surmoulage avec la même matière plastique 50. Par souci de clarté, les nervures 55 de surmoulage ne sont pas représentées sur la figure 1, et une seule de celles-ci est représentée sur la figure 2 de détail. Les nervures des figures 3 à 5 n'y sont pas non plus représentées. Sur la face en creux 240, la matière plastique 50 constituant la nervure 55 est surmoulée de sorte que les bords 260 de la paroi 500 de l'insert 200 soient recouverts au niveau du contour 550 de matière plastique 50.

La figure 4 est une vue en coupe selon B - B de la doublure 100 de hayon. La coupe est effectuée au niveau d'une encoche 600, représenté par le trait en pointillés. Du fait de l'orifice traversant 600, le bord 261 constituant le fond de l'encoche est décalé par rapport au bord 260 dans la zone sans orifice traversant illustrée sur la figure 3. Comme illustré sur la figure 4, l'orifice traversant 600 est destiné à être localisé partiellement ou en totalité sous une nervure de surmoulage 55 issue de la pièce de carrosserie 100. Dans ce mode de réalisation, l'encoche 600 est située sous le pied 58 de la nervure de surmoulage 55. Dans la pièce de carrosserie 100, la matière plastique 50 comble l'orifice traversant 600.

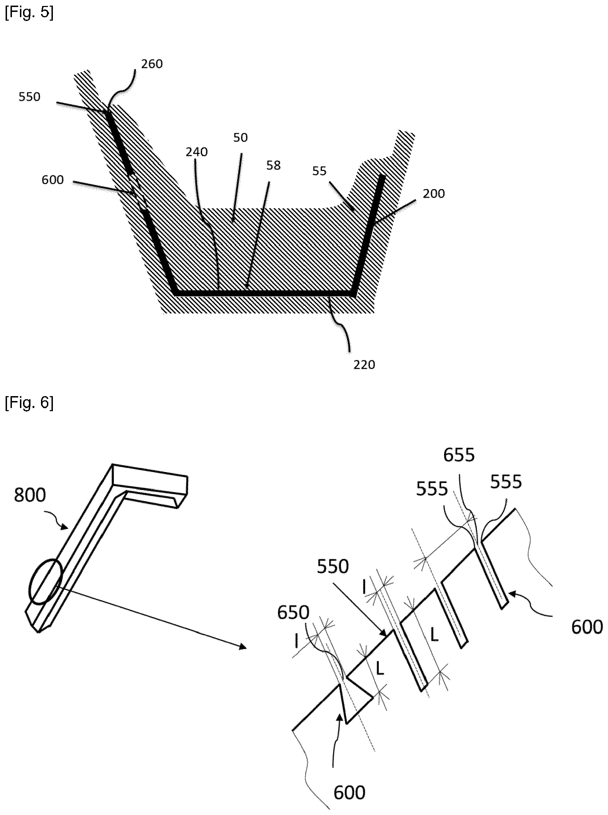

La figure 5 est une vue en coupe selon C - C de la doublure 100 de hayon. La coupe est effectuée au niveau d'un orifice traversant 600, représenté par le trait en pointillés, non débouchant au niveau du contour 550. Comme illustré sur la figure 5, l'orifice traversant 600 est destiné à être localisé partiellement ou en totalité sous une nervure de surmoulage 55 issue de la pièce de carrosserie 100. Dans la pièce de carrosserie 100, la matière plastique 50 comble l'orifice traversant 600 non débouchant au niveau du contour 550.

Sur les figures 1 à 5, les orifices 600 selon l'invention sont entièrement situés dans une zone du contour 550 qui s'étend sur 40 mm de largeur de la paroi 500.

Les encoches 600 débouchent au niveau du contour de la paroi par une ouverture dont la largeur, qui est la largeur de l'encoche au niveau du contour, est inférieure à la longueur de l'encoche. Les encoches 600 groupées, situées à l'extrémité de la zone de montant latéral 400 sont des orifices traversant qui peuvent être similaires en forme, et/ou peuvent être distribués régulièrement sur une partie du contour 550, c'est à dire avec un espacement identique entre eux. En effet, sur cette partie du contour, les centres des ouvertures d'une paire de deux encoches successives sont séparés par une distance qui est identique, quelle que soit la paire d'encoches considérée. En revanche, l'encoche 600 située vers le milieu de la zone de montant latéral 400 ne forme pas avec les autres encoches un ensemble d'orifices traversant distribués régulièrement sur une partie du contour 550 car l'espacement entre cette encoche et l'encoche précédente est supérieur à l'espacement entre les trois encoches situées à l'extrémité de la zone latérale 400. Deux encoches 600 successives définissent entre elles un relief 610 ayant, en projection dans le plan local de la paroi 500, une forme complémentaire de celle de ses deux encoches adjacentes. Ainsi, la partie du contour 550 de la paroi 500 comporte une succession d'encoches 600 et de reliefs 610, définissant une forme typique dite « en créneaux ».

Dans le mode de réalisation de la figure 1, les encoches ont, dans le plan local de la paroi 500 de l'élément de renforcement, une forme rectangulaire. Cependant elles pourraient également comporter un resserrement, ou bien être évasées en partant du bord du contour, ayant ainsi, par exemple une forme de type « pièce de puzzle », telle qu'une forme en T, présentant éventuellement des angles arrondis, ou une forme en queue d'aronde, en trapèze, éventuellement avec des angles arrondis, en ellipse, en oméga, en arc de cercle.

La figure 6 représente un élément de renforcement 800 selon un autre mode de réalisation de l'invention. L'élément de renforcement 800 présente une section en forme de U. Quatre encoches 600 sont visibles sur le détail de l'élément de renforcement représenté sur la figure 6. Elles sont situées sur la partie latérale de la paroi 550 de l'élément de renforcement 800. Parmi ces encoches 600, trois ont, dans le plan local de la paroi 550 de l'élément de renforcement 800, une forme rectangulaire. L'autre encoche 600 présente une forme en queue d'aronde. Chaque encoche 600 est un évidement de forme allongée, débouchant au niveau du contour 550 par une ouverture 650 de faible largeur l. La largeur I, qui est la largeur de l'encoche 600 au niveau du contour 550, est inférieure à la longueur L de l'encoche. L'élément de renforcement 800 comprend donc plusieurs orifices traversant (encoches 600) similaires en forme. En effet, il comporte trois encoches rectangulaires. Celles-ci sont distribuées régulièrement sur au moins une partie du contour 550. En effet, sur cette partie du contour 550, les centres 655 des ouvertures 650 d'une paire de deux encoches 600 rectangulaires successives sont séparés par une distance qui est identique, quelle que soit la paire d'encoches rectangulaires considérée. Sur ladite partie du contour 550, on distingue des encoches identiques (rectangles de même taille). En revanche, le centre de l'ouverture de l'encoche en queue d'aronde est situé à une distance du centre de l'ouverture de l'encoche rectangulaire la plus proche qui est différente dans ce mode de réalisation de la distance séparant les centres des ouvertures de deux encoches rectangulaires successives.

L'invention n'est pas limitée aux modes de réalisation présentés et d'autres modes de réalisation apparaîtront clairement à l'homme du métier. Il est notamment possible que la pièce de carrosserie soit par exemple une porte latérale. L'insert de renfort surmoulé pourrait être présent au niveau d'une autre zone d'effort, par exemple une zone latérale inférieure de la lunette 700L ou en zone serrure 700S. L'orifice traversant pourrait ne pas être localisé sous une nervure de surmoulage. L'orifice traversant pourrait ne pas être situé entièrement dans la zone du contour qui s'étend sur 40 mm de largeur.

### Liste de références

50 : matière plastique composite
55 : nervure de surmoulage
58 : pied de la nervure de surmoulage 55
100 : pièce de carrosserie en matière plastique composite
200 : élément de renforcement pour la pièce de carrosserie 100 en matière plastique composite
220 : face « interne » de l'élément de renforcement 200
240 : face « externe » de l'élément de renforcement 200
260 : bord de l'élément de renforcement 200
261 : fond de l'encoche
300 : zone supérieure de fixation de charnières
400 : zone latérale de reprise d'efforts de vérins
500 : paroi de l'élément de renforcement 200
550 : contour délimitant la paroi 500 de l'élément de renforcement 200
555 : extrémités du contour délimitant l'ouverture de l'encoche
600 : orifice qui traverse complètement l'épaisseur de l'élément de renforcement 200, encoche
610 : relief entre deux encoches 600
650 : ouverture de l'encoche
655 : centre de l'ouverture de l'encoche
700L : zone latérale inférieure de la lunette
700S : zone serrure
800 : élément de renforcement
L : longueur de l'encoche
l : largeur de l'ouverture de l'encoche

## Revendications

1. Elément de renforcement (200, 800) pour pièce de carrosserie (100) en matière plastique (50), formant un insert apte à être au moins partiellement surmoulé dans la pièce de carrosserie, l'élément de renforcement (200, 800) comprenant une paroi (500) délimitée par un contour (550), la paroi (500) comprenant plusieurs orifices (600) qui traversent totalement l'épaisseur de la paroi (500) de l'élément de renforcement, lesquels orifices (600) sont chacun une encoche débouchant au niveau du contour (550), **caractérisé en ce que** l'encoche (600) débouche au niveau du contour (550) de la paroi (500) par une ouverture (650) dont la largeur (l) est inférieure à la longueur (L) de l'encoche (600).

2. Elément de renforcement (200, 800) selon la revendication 1, fabriqué en métal, de préférence en acier.

3. Elément de renforcement (200) selon l'une quelconque des revendications précédentes, l'orifice traversant (600) étant destiné à être localisé partiellement ou en totalité sous une nervure de surmoulage (55) issue de la pièce de carrosserie (100).

4. Elément de renforcement (200) selon l'une quelconque des revendications précédentes, dans lequel l'orifice traversant (600) est destiné à être situé sous le pied (58) d'une nervure de surmoulage (55) issue de la pièce de carrosserie (100).

5. Elément de renforcement (200, 800) selon l'une quelconque des revendications précédentes, comprenant plusieurs orifices traversant (600) similaires en forme distribués régulièrement sur au moins une partie du contour (550).

6. Elément de renforcement (200, 800) selon l'une quelconque des revendications précédentes, présentant une section en forme de U, dans lequel les encoches (600) sont sur une partie latérale de la paroi (500) de l'élément de renforcement (200, 800).

7. Pièce de carrosserie (100) de véhicule automobile, réalisée en matière plastique, **caractérisée en ce qu'**elle comporte un élément de renforcement (200, 800) selon l'une quelconque des revendications précédentes.

8. Pièce de carrosserie (100) de véhicule automobile selon la revendication précédente, dans laquelle la matière plastique (50) comble l'orifice traversant (600).

9. Pièce de carrosserie (100) de véhicule automobile selon l'une quelconque des revendications 7 à 8, constituant une doublure de hayon.

## Patentansprüche

1. Verstärkungselement (200, 800) für ein Karosserieteil (100) aus Kunststoff (50), das einen Einsatz bildet, der eingerichtet ist, um zumindest teilweise in dem Karosserieteil umspritzt zu werden, wobei das Verstärkungselement (200, 800) eine Wand (500) aufweist, die von einer Kontur (550) begrenzt ist, wobei die Wand (500) mehrere Löcher (600) aufweist, welche die Dicke der Wand (500) des Verstärkungselements vollständig durchqueren, wobei die Löcher (600) jeweils eine Einkerbung sind, die im Bereich der Kontur (550) ausmündet, **dadurch gekennzeichnet, dass** die Einkerbung (600) im Bereich der Kontur (550) der Wand (500) über eine Öffnung (650) ausmündet, deren Breite (1) kleiner als die Länge (L) der Einkerbung (600) ist.

2. Verstärkungselement (200, 800) nach Anspruch 1, hergestellt aus Metall, bevorzugt aus Stahl.

3. Verstärkungselement (200) nach einem der vorhergehenden Ansprüche, wobei das Durchgangsloch (600) dazu bestimmt ist, teilweise oder vollständig unter einer Umspritzrippe (55) befindlich zu sein, die von dem Karosserieteil (100) stammt.

4. Verstärkungselement (200) nach einem der vorhergehenden Ansprüche, wobei das Durchgangsloch (600) dazu bestimmt ist, unter dem Fuß (58) einer Umspritzrippe (55) befinden, die von dem Karosserieteil (100) stammt.

5. Verstärkungselement (200, 800) nach einem der vorhergehenden Ansprüche, aufweisend mehrere ähnliche geformte Durchgangslöcher (600), die gleichmäßig über zumindest einen Teil der Kontur (550) verteilt sind.

6. Verstärkungselement (200, 800) nach einem der vorhergehenden Ansprüche, das einen U-förmigen Querschnitt aufweist, wobei die Einkerbungen (600) auf einem seitlichen Teil der Wand (500) des Verstärkungselements (200, 800) sind.

7. Karosserieteil (100) für Kraftfahrzeug, realisiert aus Kunststoff, **dadurch gekennzeichnet, dass** es ein Verstärkungselement (200, 800) nach einem der vorhergehenden Ansprüche aufweist.

8. Karosserieteil (100) für Kraftfahrzeug nach dem vorhergehenden Anspruch, wobei der Kunststoff (50) das Durchgangsloch (600) ausfüllt.

9. Karosserieteil (100) für Kraftfahrzeug nach einem der Ansprüche 7 bis 8, das eine Heckklappenauskleidung bildet.

## Claims

1. Reinforcing element (200, 800) for a bodywork part (100) made from plastic (50), forming an insert capable of being at least partially overmolded in the bodywork part, the reinforcing element (200, 800) comprising a wall (500) delimited by a contour (550), the wall (500) comprising several orifices (600) that pass all the way through the thickness of the wall (500) of the reinforcing element, which orifices (600) are each a notch emerging at the contour (550),
**characterised in that** the notch (600) emerges at the contour (550) of the wall (500) by an opening (650) whose width (I) is smaller than the length (L) of the notch (600).

2. Reinforcing element (200, 800) according to claim 1, made from metal, preferably steel.

3. Reinforcing element (200) according to any one of the preceding claims, the through orifice (600) being intended to be located partially or entirely under an overmolding rib (55) of the bodywork part (100).

4. Reinforcing element (200) according to any one of the preceding claims, wherein the through orifice is intended to be located under the base (58) of an overmolding rib (55) of the bodywork part (100).

5. Reinforcing element (200, 800) according to any one of the preceding claims, comprising several similar through orifices (600) in terms of shape distributed evenly over at least part of the contour (550).

6. Reinforcing element (200, 800) according to any one of the preceding claims, having a U-shaped section, wherein the notches (600) are on a side part of the wall (500) of the reinforcing element (200, 800).

7. Bodywork part (100) of a motor vehicle, made of plastic, **characterized in that** it comprises a reinforcing element (200, 800) according to any one of the preceding claims.

8. Bodywork part (100) of a motor vehicle according to the preceding claim, wherein the plastic material (50) fills the through orifice (600).

9. Bodywork part (100) of a motor vehicle according to any one of claims 7 to 8, forming a tailgate lining.
